# EUROPEAN PATENT SPECIFICATION

(11) **EP 1 479 566 B1**
(45) Date of publication and mention of the grant of the patent: **25.07.2007**
(21) Application number: 04380110.9
(22) Date of filing: 18.05.2004
(51) Int. Cl.: B60R 11/00

(54) **Anchoring device with a mechanical fuse**
Befestigungsvorrichtung mit mechanischer Sicherung
Dispositif de fixation avec fusible mécanique

(30) Priority: 20.05.2003 ES 200301229 U
(43) Date of publication of application: 24.11.2004
(73) Proprietor: Seat, S.A., 08040 Barcelona (ES)
(72) Inventor: Ferre Ripol, Jaume, 08760 Martorell (Barcelona) (ES); Vera Gil, Jordi, 08760 Martorell (Barcelona) (ES)
(74) Representative: Davila Baz, Angel

(56) References cited:
- DE-A- 19 816 053
- US-A- 4 760 495
- US-A- 4 906 152
- US-A- 5 135 341

## Description

The present invention refers to an anchoring device with a mechanical fuse, especially applicable in the assembly of components inside vehicle interiors.

Document US-A-5135341 describes the fixation of the front panel of an electronic equipment by means of screws and resilient bushings.

It is known that for passive safety reasons, there are strict standards governing the elements projecting inside the vehicle interior with regard to size and shape thereof. The management controls of the climate control system are one of the critical elements because the necessity of being able to turn them manually makes it necessary for them to project from the plane of the remaining controls.

For ensuring safety inside the vehicle interior, the official approval standard sets maximum levels for the projections in each area of the dashboard. This produces an incompatibility in the use of the rotational manual actuation controls with the tests required for the official approval of the vehicle incorporating them since, in the position they are in, they surpass the maximum levels permitted. Usually to prevent this incompatibility, either the climate control panel is assembled outside of the possible impact area, or else panels are designed without said projections.

The present invention has as an object an anchoring device with a mechanical fuse, which allows assembling certain components with projecting elements on the dashboard, without said elements affecting the safety standards, and all this is a result of the fact that the anchoring devices used allow for the assembled components to withdraw or move towards a withdrawn position when a certain force is applied thereon, for example when they are struck, such that the projections they may include do not entail a risk for the occupants of the vehicle.

With this system, the components are fixed inside the vehicle interior, for example on the dashboard, by means of mechanical fuses including lock screws and, under normal use conditions, the components are fixed to the dashboard or area where they are assembled with said lock screws, as in standard anchoring systems, whereas in the event of being struck, for example due to an accident, beyond a certain magnitude, a movement of the component towards the interior of the dashboard occurs, using an available space provided for that purpose, thus eliminating any risk of injuries due to the projections of the mentioned components.

The indicated effects and advantages are achieved, according to the present invention, by means of an anchoring device consisting of a tubular divider and a spring lock washer. The tubular divider is of a stiff nature and is intended to be introduced through holes of the component to be assembled, being of a length exceeding the depth of these holes and being finished off at one of its end sections with a peripheral flange. The lock screws for fixing the component to the dashboard or assembly area of the vehicle pass through the tubular dividers. The lock washer is tightly assembled on the outer surface of the tubular divider at a distance from the peripheral flange of said divider approximately equal to the depth of the holes of the component through which the divider is introduced.

According to another feature of the invention, the tubular divider is externally provided with a peripheral seat for the spring lock washer. This seat is separated from the peripheral flange by a distance approximately equal to the depth of the holes of the component to be fixed. Furthermore, the seat has locking means preventing the free slipping of the washer, such that to remove it from the seat and to overcome the locking means, it is necessary to elastically deform or expand the washer, to which end it will be necessary to apply a certain force.

The features of the anchoring device of the invention are set forth below with greater detail in the following description with the aid of the attached drawings which show a non-limiting embodiment.

In the drawings:
Figure 1 shows a front elevational view of a climate control panel assembled on the dashboard of a vehicle.
Figure 2 shows an enlarged, partial sectional view of the climate control panel assembled on the dashboard, taken along the II-II section line.
Figure 3 shows a perspective view of the components of the anchoring device of the invention.

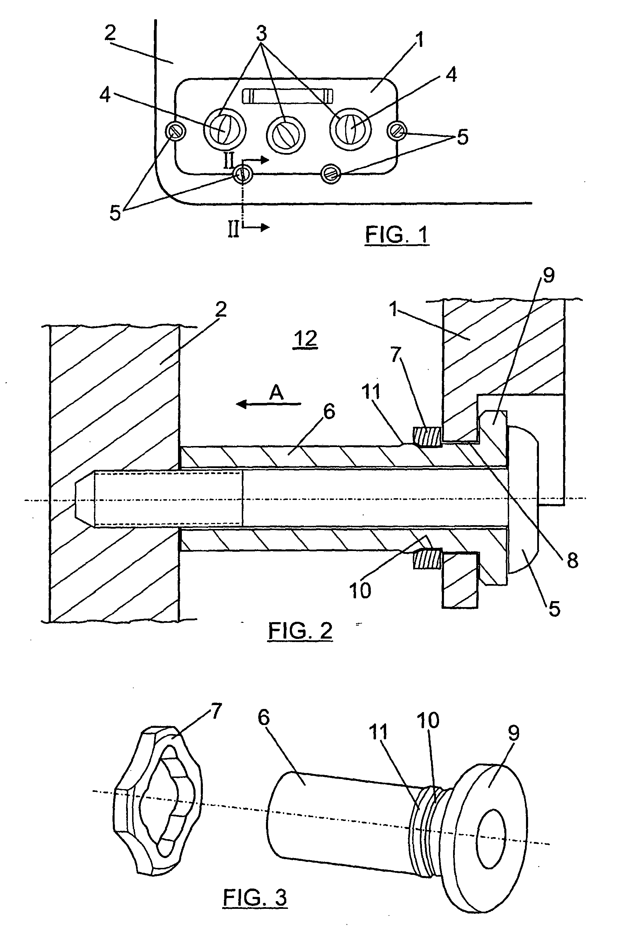

Figure 1 shows a front elevational view of a climate control panel referred to with number 1, which is assembled on a certain area of the dashboard 2 of a vehicle. This climate control panel includes a series of rotational controls 3 which, as is the usual case, have a diametric handle 4 which substantial projects from the surface of the panel 1 and dashboard 2.

The fixing of the panel 1 to the dashboard 2 is carried out by means of screws 5.

According to the invention, the screws 5 pass through an anchoring device made up of a tubular divider 6 and a spring lock washer 7.

The tubular divider 6 is introduced through the holes 8 of the panel 1 and is finished off at one of its end sections with a peripheral flange 9 externally resting on the area surrounding said hole. As can be seen in Figure 2, the divider 6 is of a length that greatly exceeds the depth of the holes 8, resting on the area of the dashboard 2 in which it is assembled at its end section.

The washer 7 is tightly assembled on the outer surface of the divider 6 and is separated from the peripheral flange 9 of the divider by a distance approximately equal to the depth of the holes 8.

The divider 6 has a peripheral seat 10 for the washer 7 on its outer surface. Preferably this seat, constituted of a peripheral recess, has locking means preventing the free slipping of the washer 7, said means possibly being constituted of a peripheral rib or thickening 11 limiting the seat 10 on the side farthest from the flange 9.

The seat 10 will be situated at a distance from the flange 9 approximately equal to the depth of the boreholes 8.

The washer 7 will be assembled on the seat 10 and fixed thereto due to its resilient nature, and it can only overcome and move over the thickening 11 by means of its elastic expansion or deformation when it is pushed in the direction of the arrow A with a force exceeding a preset value.

The lock screw 5 for fixing the panel 1 to the dashboard 2 is introduced through the divider 6.

With the constitution discussed, in a normal situation the panel 1 is fixed solidly to the dashboard 2 by means of lock screws 5. In the event that the panel 1 is struck, for example due to an accident, if it exceeds the preset value, it will cause the movement of the washer 7 in direction A, and with it the movement of said panel 1 towards the interior of the dashboard, in a space 12 provided for that purpose, such that both the panel 1 and the controls 3 withdraw towards the interior of the dashboard and do not constitute elements of risk for the passengers.

The washer 7 can adopt an approximately polygonal configuration, as shown in Figure 3.

The tubular divider 6 is of a uniform section along the length thereof, except for the peripheral thickening 11 and seat 10.

For the assembly of the anchoring devices in the panel 1, the tubular divider 6 will be introduced through the hole 8, and then the washer 7 will be assembled, overcoming the peripheral rib or projection 11 by means of its elastic deformation. Then the screws 5 are introduced, which will be screwed into the holes of the dashboard.

## Claims

1. An anchoring device with a mechanical fuse, especially applicable to the assembly of components (1) inside vehicle interiors, **characterized in that** it is made up of a tubular divider (6) intended for being introduced through holes (8) of the component to be assembled, and through which holes lock screws (5) for fixing said component pass, and of a spring lock washer (7) tightly assembled on the outer surface of the tubular divider (6); which divider is of a length exceeding the depth of the holes (8) of the component to be assembled, of uniform section and finished off at one of its end sections with a peripheral flange (9), externally provided with a peripheral seat (10) for the spring lock washer (7), which is separated from the peripheral flange (9) by a distance approximately equal to the depth of the holes (8) of the component to be fixed and is provided with locking means (11) preventing the free slipping of the washer out of said seat and which can be overcome by said washer by means of elastic expansion thereof; and which spring lock washer defines a peripheral stop on the tubular divider (6) between which stop and the peripheral flange (9) of said divider, the component to be assembled is retained.

2. A device according to claim 1, **characterized in that** the peripheral seat for the lock washer (7) consists of a peripheral groove (10) in which said washer is partially housed.

3. A device according to claims 1 or 2, **characterized in that** the locking means of the peripheral seat (10) consist of a peripheral thickening (11) of the tubular divider (6) which limits said seat on the side farthest from the peripheral flange (9) of the divider.

## Patentansprüche

1. Befestigungsvorrichtung mit einer mechanischen Sicherung insbesondere zur Anwendung beim Montieren von Bauelementen (1) in Fahrzeuginnenräumen, **dadurch gekennzeichnet, dass** sie aus einem röhrenförmigen Trennelement (6) zum Einführen durch Löcher (8) des zu montierenden Bauelementes, wobei durch diese Löcher Sicherungsschrauben (5) zum Befestigen des Bauelementes laufen, und einem Federring (7) aufgebaut ist, der fest an der Außenfläche des röhrenförmigen Trennelementes (6) angeordnet ist, wobei das Trennelement so lang ausgeführt ist, dass es die Tiefe der Löcher (8) des zu montierenden Bauelementes übersteigt, mit einem gleichbleibenden Querschnitt ausgebildet ist und an einem seiner Endabschnitte mit einem peripheren Flansch (9) ausgestattet ist, der außen mit einem peripheren Sitz (10) für den Federring (7) ausgestattet ist, der von dem peripheren Flansch (9) um einen Abstand getrennt ist, der etwa der Tiefe der Löcher (8) des zu befestigenden Bauelementes entspricht und mit einem Verriegelungsmittel (11) bereit gestellt ist, das das freie Verrutschen des Rings aus dem Sitz verhindert und von dem Ring mittels seiner elastischen Ausdehnung überwunden werden kann, und wobei der Federring einen peripheren Anschlag an dem röhrenförmigen Trennelement (6) zwischen dessen Anschlag und dem peripheren Flansch (9) des Trennelementes definiert, wodurch das zu montierende Bauelement gehalten wird.

2. Vorrichtung nach Anspruch 1, **dadurch gekennzeichnet, dass** der periphere Sitz des Federrings (7) eine periphere Nut (10) umfasst, in der der Ring teilweise aufgenommen wird.

3. Vorrichtung nach Anspruch 1 oder 2, **dadurch gekennzeichnet, dass** die Verriegelungsmittel des peripheren Sitzes (10) aus einer peripheren Verdickung (11) des röhrenförmigen Trennelementes (6) bestehen, die den Sitz auf der von dem peripheren Flansch (9) des Trennelementes am meisten entfernten Seite begrenzt.

## Revendications

1. Dispositif de fixation avec un fusible mécanique, pouvant être appliqué de manière spécifique à l'assemblage de composants (1) à l'intérieur des intérieurs de véhicule, **caractérisé en ce qu'**il est constitué d'un diviseur tubulaire (6) destiné à être introduit à travers les trous (8) du composant à assembler, et à travers lesquels des vis de verrouillage des trous (5) permettent de fixer ledit passage de composant, et d'une rondelle élastique (7) assemblée de manière étanche sur la surface externe du diviseur tubulaire (6) ;lequel diviseur a une longueur supérieure à la profondeur des trous (8) du composant à assembler, d'une section uniforme et à finir sur une de ses sections terminales avec un cadre périphérique (9), pourvu extérieurement d'une assise périphérique (10) pour la rondelle élastique (7), laquelle est séparée du cadre périphérique (9) d'une distance approximativement égale à la profondeur des trous (8) du composant à fixer et est munie d'un moyen de verrouillage (11) empêchant le libre freinage de la rondelle hors de ladite assise et laquelle peut être contrôlée par ladite rondelle au moyen d'une expansion élastique de celle-ci ; et laquelle rondelle élastique délimite une butée périphérique sur le diviseur tubulaire (6) entre laquelle butée et le cadre périphérique (9) dudit diviseur, le composant à assembler est retenu.

2. Dispositif selon la revendication 1, **caractérisé en ce que** l'assise périphérique pour la rondelle élastique (7) est composée d'une rainure périphérique (10) dans laquelle ladite rondelle est logée de manière partielle.

3. Dispositif selon la revendication 1 ou 2, **caractérisé en ce que** le moyen de verrouillage de l'assise périphérique (10) consiste en un épaississement périphérique (11) du diviseur tubulaire (6) lequel limite ladite assise sur la face la plus éloignée du cadre périphérique (9) du diviseur.
